# EUROPEAN PATENT SPECIFICATION

(11) **EP 2 675 854 B1**
(45) Date of publication and mention of the grant of the patent: **30.07.2014**
(21) Application number: 12705021.9
(22) Date of filing: 08.02.2012
(51) Int. Cl.: C08K 3/00, D21H 19/56, D21H 19/58, D21H 19/60, D21H 19/62, C09D 123/08, C08L 41/00

(54) **PAPER COATING COMPOSITIONS**
PAPIERBESCHICHTUNGSZUSAMMENSETZUNG
COMPOSITIONS DE REVÊTEMENT DE PAPIER

(30) Priority: 18.02.2011 US 201113030847
(43) Date of publication of application: 25.12.2013
(73) Proprietor: Wacker Chemical Corporation, Adrian, MI 49221 (US)
(72) Inventor: DANIELS, Christian, Leonard, Fogelsville, PA 18051 (US); BOYLAN, John, Richard, Bethlehem, PA 18017 (US)
(74) Representative: Schuderer, Michael
(86) International application number: PCT/US2012/024232
(87) International publication number: WO 2012/112353

(56) References cited:
- WO-A1-2009/156341
- US-A- 3 440 199
- US-A- 4 657 821

## Description

### BACKGROUND OF THE INVENTION

Pigmented paper coating formulations generally comprise an aqueous synthetic polymeric binder emulsion and one or more pigments, and may contain other additives typically used in the art. Exemplary polymeric binders include vinyl acetate/ethylene (VAE) copolymers, optionally including other comonomers. Traditional binders for paper coatings have typically employed alkylphenol ethoxylate (APE) surfactants to maintain dispersion stability. More recently, however, regulatory trends have restricted the use of such surfactants, which are suspected to carry health risks. Thus, paper coating compositions free of alkylphenol ethoxylates would be of commercial interest.

One of the most important tasks of paper and cardboard is its function as a carrier for printing. But fibrous substrates such as paper have a relatively rough surface. To improve their printability, but also their quality in terms of smoothness, gloss, and in particular to improve whiteness, paper is coated with paper coatings. Aqueous paper coating compositions essentially contain pigments, synthetic binders, other additives and water. Besides copolymers based on styrene and butadiene, copolymers of vinyl acetate and ethylene are established synthetic binders in paper coating.

In US 3,812,072 it is proposed to improve the pigment-binding capacity of paper coating compositions based on vinyl ester ethylene dispersions with the addition of polyalkylene oxide compounds. In US 5,071,903 the binding force of vinyl acetate copolymers in paper coatings is improved by using a specific emulsifier combination during polymerization: a combination of a surfactant providing "sharp nucleation" (for example the disodium salt of an ethoxylated alcohol half ester of sulfosuccinic acid) and a surfactant with a C14 to C20 alkylene unit (for example a sodium salt of an oleyl propanol amide sulfosuccinate). In the sole example where ethylene is a comonomer with the vinyl acetate, both of the surfactants are anionic and no nonionic surfactant is used. In US 2004/0204535 a VAE binder stabilized with a cationic surfactant is used for improving attachment of inks to paper. In US 3,404,112 a vinyl acetate ethylene triallyl cyanurate interpolymer is described as providing a paper coating having improved pick characteristics. Paper coatings particularly for ink jet recording based on VAE copolymers such as Airflex EP 1 and Airflex EP 17 are described in US 6,841,206. APE-free coatings based on a VAE copolymer with a combination of an anionic surfactant (sodium laureth sulfate with 1 - 12 EO-units) and a nonionic surfactant (ethoxylated alcohols) are described by Goldstein (US 6,908,524) for use as aids for creping paper webs.

### SUMMARY OF THE INVENTION

In one aspect, the invention provides a composition for coating paper, including at least one pigment selected from the group consisting of polymeric pigments, aluminosilicates (for example clay or kaolin), calcium carbonate, titanium dioxide, talc, barium sulfate, zinc oxide, aluminum trihydrate, amorphous silica and silicates;
wherein the pigment is dispersed in an aqueous dispersion of a polymeric binder that is a copolymer of vinyl acetate, ethylene, at least one ethylenically unsaturated sulfonic acid or salt thereof and optionally one or more other monomers, wherein vinyl acetate units constitute in a range of 70-90 wt% of the polymeric binder and ethylene units constitute in a range of 10-30 wt% of the polymeric binder; and
wherein the polymeric binder has a mean particle size in a range from 0.1 µm to 0.3 µm and the optional one or more other monomers do not include any *N*-(C₁₋₄) alkylol (meth)acrylamide; and
wherein the aqueous dispersion of the polymeric binder is free of alkylphenol ethoxylate surfactants and includes a nonionic surfactant component consisting of a polyethylene oxide/polypropylene oxide block copolymer and optionally one or more other nonionic surfactants, and optionally includes an anionic surfactant component consisting of one or more anionic surfactants.

In another aspect, the invention provides a method of coating paper or cardboard that includes applying to a surface of the paper the above composition and subsequently drying the composition to form a solid coating on the surface.

In yet another aspect, the invention provides paper or cardboard having on a surface thereof a solid coating formed by drying the above composition.

### DETAILED DESCRIPTION OF THE INVENTION

The invention provides paper coating compositions comprising one or more pigments and an aqueous polymeric binder dispersion comprising a VAE resin containing units of an unsaturated sulfonic acid or salt thereof, wherein the composition is free of APE surfactants. The pigments may include minerals such as aluminosilicates, calcium carbonate, titanium dioxide, talc, barium sulfate, zinc oxide, aluminum trihydrates, amorphous silica and silicates, polymeric pigments such polystyrene, and combinations of any of these. The polymeric binder constitutes from 1 to 50 wt% of the solids in the composition, more typically 3 to 22 wt%. The pigment(s) constitute(s) from 50 to 99 wt% of the solids in the composition, more typically 78 to 97 wt%. Upon applying to a surface of the paper and subsequent drying, the compositions form a solid coating that facilitates high-quality gravure printing, as well as lithographic and flexographic printing.

### Polymeric Binder

The polymeric binder comprises vinyl acetate and ethylene copolymerized with an unsaturated sulfonic acid monomer and optionally an unsaturated carboxylic acid monomer. Vinyl acetate units constitute at least 65 wt%, or at least 70 wt%, or at least 75 wt% of the dispersed polymer. They constitute at most 95 wt%, or at most 90 wt%, or at most 85 wt% of the dispersed polymer. Ethylene units constitute at least 5 wt%, or at least 10 wt%, or at least 15 wt% of the dispersed polymer. They constitute at most 30 wt%, or at most 25 wt%, of the dispersed polymer. Using an appropriate ratio of ethylene to vinyl acetate provides a binder with a Tg that results in good coating compressibility (deformability to conform to gravure cells) and good supercalendered smoothness, both of which are beneficial for printing the coated paper with gravure printing cylinders. Typically suitable Tg values are in a range from -20°C to 12°C.

Suitable unsaturated sulfonic acid monomers include 2-acrylamido-2-methylpropane sulfonic acid and salts thereof, as well as vinylsulfonic acid and salts thereof. Typical salts include potassium, sodium and ammonium salts. One specific suitable example is available commercially from Lubrizol Corporation of Wickliffe, OH under the name AMPS@ 2403. Sulfonic acid/salt monomer units constitute from 0.1 to 5.0 wt%, more typically 0.2 to 1.0 wt%, of the polymeric binder.

Preferred are ethylenically unsaturated sulfonic acids having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid, vinylbenzenesulfonic acid.

In addition to or instead of said acids, it is also possible to use the salts thereof, preferably the alkali metal or ammonium salts thereof, particularly preferably the sodium salts thereof, such as, for example, the sodium salts of vinylsulfonic acid and of 2-acrylamidopropanesulfonic acid.

In some embodiments the binder may include 0 to 30 wt % of other comonomer units from the group consisting of vinyl esters and (meth)acrylic acid esters. Suitable other vinyl esters are those of carboxylic acids with 3 to 12 carbon atoms such as vinyl propionate, vinyl butyrate, vinyl 2-ethylhexanoate, vinyl laurate, 1-methyl vinyl acetate, vinyl pivalate and vinyl esters of α-branched monocarboxylic acids with 9 to 11 carbon atoms, such as VeoVa™9R or VeoVa™10R (available from Hexion Specialty Chemicals, Inc., Columbus, OH). Suitable methacrylic or acrylic acid esters are esters of unbranched or branched alcohols with 1 to 18 carbon atoms such as methyl methacrylate, methyl acrylate, n-butyl acrylate and 2-ethyl hexyl acrylate.

Ethylenically unsaturated carboxylic acid monomers may also be included in the monomer mixture for making the binder. Examples include ethylenically unsaturated C3-C8-monocarboxylic acids, such as acrylic acid, methacrylic acid and crotonic acid, ethylenically unsaturated C4-C8-dicarboxylic acids, such as maleic acid, fumaric acid, itaconic acid and citronic acid, and the monoamides thereof and monoesters with C1-C12-alkanols, preferably C1-C4-alkanols, such as, for example, monomethyl maleate and mono-n-butyl maleate. The amount of ethylenically unsaturated carboxylic acid monomer units in the polymeric binder, if present, may be as high as 5 wt%. Typically, it will be in a range from 0.5 to 2.0 wt%.

In some embodiments, polyunsaturated comonomers may be included in the monomer feed for making the binder. Nonlimiting examples include triallyl cyanurate and di- and tri-functional (meth)acrylates. If present, such monomers in total will constitute from about 0.01 wt% to about 1 wt%. Typically the amount will be at most 0.5 wt%, or at most 0.2 wt%, or at most 0.1 wt%. The presence of a polyunsaturated comonomer is not beneficial in all embodiments of the invention, however, and thus in some embodiments such monomers are to be excluded.

Depending on the specific needs of a given application, it may in some cases be advantageous to exclude certain monomers in making the polymeric binder. In other cases, these monomers may be included up to a limit of 1.0 wt% of the polymeric binder. The excluded or limited monomers may include any one or more of the following: *N*-(C₁₋₄) alkylol (meth)acrylamides (e.g., *N*-methylol acrylamide); i-butoxy methylacrylamide; acrylamidoglycolic acid; acrylamidobutyraldehyde; dialkyl acetals of acrylamidobutyraldehyde; glycidyl-containing compounds (e.g., glycidyl (meth)acrylate, triglycidyl isocyanurate, etc.); ethylenically unsaturated phosphates, phosphonates or sulfates; ethylenically unsaturated silicon compounds; (meth)acrylamide or *N*-substituted meth)acrylamides; (meth)acrylic esters; vinyl ethers; acrylonitrile; butadiene; styrene; vinyltoluene; divinyl benzene and/or other olefinically unsaturated hydrocarbons other than ethylene; halogenated monomers (e.g., vinyl chloride); and esters of allyl alcohol.

In particular, the inventors have found that including N-methylol acrylamide increases the potential for pigment agglomeration / destabilization, and therefore this monomer is preferably excluded. An additional reason to exclude this monomer is its propensity for producing formaldehyde, a toxic material. Other N-methylol-containing monomers may also share this problem. Therefore in some embodiments of the invention, the VAE polymeric binder does not contain units of NMA or any other N-methylol-containing monomer, or any other monomer that produces formaldehyde either in the coating composition or on a treated substrate. For the same reason, it may further be desired to exclude urea-formaldehyde, glycol uril, and other formaldehyde-generating moieties in the binder, and preferably in the entire coating composition. Thus in some embodiments, the composition is free of formaldehyde-generating moieties.

To further avoid formaldehyde formation, it is also preferred that the binder copolymer be prepared by initiating the vinyl acetate/ethylene dispersion polymerization with an initiator that does not contain formaldehyde-producing moieties, as opposed to using the more typical redox pair initiator employing formaldehyde-producing sodium formaldehyde sulfoxylate (SFS) or zinc formaldehyde sulfoxylate as the reducing agent. In general, suitable non-formaldehyde generating reducing agents for redox pairs include, as non-limiting examples, those based on ascorbic, bisulfite, erythorbate or tartaric chemistries as known in the art, and a commercial reducing agent known as BRUGGOLITE® FF6M manufactured by Bruggeman Chemical of Heilbronn, Germany. Non-redox initiators may also be used, such as persulfates, peroxides and azo-type initiators, all of which are well known in the art.

In some embodiments of the invention, the compositions are free of volatile organic compounds (VOC's), for example organic solvents. They may also be free of alkyds and/or volatile amines. Examples of volatile amines that may be excluded include monoamines and alkanolamines such as mono-, di- and triethanolamine and substituted variants of any of these, such as are commonly used in paint formulations.

### Surfactants

Surfactants used to stabilize the binder dispersion include both nonionic and anionic types but do not include alkylphenol ethoxylate (APE) surfactants.

Suitable anionic surfactants include emulsifiers such as alkali metal and ammonium salts of C6 to C18 alkyl sulfates, of C6 to C18 alkyl phosphonates, of sulfuric monoesters or phosphoric mono- and diesters of ethoxylated C6 to C22 alkanols with 2 to 50 EO units, of C12-C18 alkylsulfonic acids, of C9-C18 alkylarylsulfonic acids, of sulfosuccinic monoesters and sulfosuccinic diesters of C6-C22 alkanols and ethoxylated C6-C22 alkanols with 2 to 50 EO units, and nonethoxylated C4-C9-alkylphenols. Specific examples of useful anionic surfactants include sodium dihexyl sulfosuccinates (available commercially as AEROSOL@ MA-80-I from Cytec Industries Inc. of Patterson, NJ), sodium dodecyl benzenesulfonates (available commercially as RHODACAL® DS-10 from Rhodia of Cranbury, NJ), and polyoxyethylene tridecyl ether phosphates (available commercially in the free acid form as RHODAFAC® RS-610; Rhodia).

Suitable nonionic surfactants include polyethylene oxide/polypropylene oxide block copolymers. A specific useful nonionic surfactant is available commercially as PLURONIC® L64 from BASF Corporation of Florham Park, NJ. PLURONIC® L64 is a polyethylene oxide/polypropylene oxide block copolymer, more specifically a triblock copolymer according to the formula (ethylene oxide)₁₃(propylene oxide)₃₀(ethylene oxide)₁₃. Other polyethylene oxide/polypropylene oxide block copolymers, especially triblock copolymers, may be used instead or in addition. Other nonionic surfactants may be included along with the polyethylene oxide/polypropylene oxide block copolymer surfactants, but they are not required. Examples of such optional nonionic surfactants include ethoxylates of long-chain branched or unbranched C6-C36 alcohols with 3 to 50 EO units, and aryl-substituted phenol alkyleneoxy ethers. Specific examples include ethylene oxide tridecyl alcohols sold commercially as RHODASURF® TLA 4050 (Rhodia) and RHODASURF® TLA3040 (Rhodia).

The amount of total surfactant used in the dispersion falls in a range of 0.01 to 5.0 wt% and more preferably in the range of 0.1 to 3.8 wt%, based on total polymer.

The particles of the binder emulsion have a small / narrow particle size distribution having a mean particle size less than 1 µm, typically in a range from 0.1 to 0.3 µm. This particle size allows for good paper coating rheology and provides a high surface area for pigment-to-pigment and pigment-to-paper binding strength.

Preparation of paper coatings with the binders disclosed herein may be according to formulation principles generally known in the art. The proportion of the formulation components in paper coatings is typically expressed relative to 100 parts of pigment. Suitable pigments include polymeric pigments, aluminosilicates (for example clay or kaolin), calcium carbonate, titanium dioxide, talc, barium sulfate, zinc oxide, aluminum trihydrate, amorphous silica and silicates. Preferably kaolin and/or calcium carbonate. The polymeric binder constitutes from 1 to 50 wt% of the solids in the composition, more typically 3 to 22 wt%. The pigment(s) constitute(s) from 50 to 99 wt% of the solids in the composition, more typically 78 to 97 wt%.

Other components of the formulation may include dispersants such as sodium polyacrylates, lubricants such as fatty acid salts (e.g., stearates), optical brighteners as diaminostilbene disulfonic acid derivates, cobinders, defoamers, preservatives and water. To prepare the paper coating compositions, the pigment is added as an aqueous pigment slurry and mixed with the binder, the other additives and water.

Application of paper coating composition to the substrate may be made with any of the usual coating devices such as blade coaters, roll coaters, air knife coaters, rod coaters and scrapers. Any support material may be coated, and typical suitable support materials include paper and cardboard.

When utilized as a pigment binder in paper coatings for rotogravure printing, VAE polymers according to the invention provide good print quality as measured by the Helio Print test method. They also effectively bind the coating pigment particles to each other and to the paper surface. This prevents dusting (ejection of loose pigment particles from the coated paper surface during processing) as well as contamination of printing cylinders with the pigment during a multi-cylinder gravure printing process.

The compositions of the invention are typically used to cover entirely at least one side of a sheet or web of paper, and may cover both sides entirely, although coverage of the entire surface is not essential. The compositions may further include polymeric dispersions other than the above-described VAE copolymers, for example vinyl acrylics, styrene butadiene, acrylics, vinyl acetate homopolymers, and the like.

### EXAMPLES

All polymers were prepared in a 1.05 gallon stainless steel autoclave equipped with a jacket for cooling, a mechanical turbine agitator, and metering pumps for addition of the various feeds. Deionized water was used for all experiments.

### Example 1

The autoclave was charged with 850 g of water, 8.8 g of AEROSOL@ MA-80-I (sodium dihexyl sulfosuccinate), 0.5 g of sodium acetate, 5.0 g of a 1% solution of ferrous ammonium sulfate. The pH of the charge was adjusted to 4.2 with 1.1 g of acetic acid. Agitation was begun and 262.5 g of vinyl acetate was charged.

After the initial charging, the reactor was purged with nitrogen followed by a purge with ethylene and heated under agitation to 55 °C, then 400 g of ethylene was charged. To initiate polymerization a solution of 6% sodium persulfate was feed at 0.5 g/min and a 3.6% solution of sodium erythorbate was also feed at 0.5 g/min. Upon evidence of an exotherm, two additional feeds were begun: 1277.5 g of vinyl acetate was added over 150 minutes and an aqueous feed consisting of 187.2 g water, 38.7 g of PLURONIC® L64 (ethylene oxide/propylene oxide block copolymer supplied by BASF), 38.7 g of AMPS® 2403 (50% solution of the sodium salt of acrylamido methyl propane sulfonic acid supplied by Lubrizol), 19.5 g acrylic acid, and 10.9 g of 7% ammonium hydroxide was feed uniformly over 150 minutes. When the monomer feeds were begun, the temperature as ramped from 55 °C to 90 °C over 60 minutes and then held at 90°C for the remainder of the reaction.

The addition rates of the sodium persulfate and sodium erythorbate solutions were adjusted over time in an effort to obtain a uniform conversion profile. Both of these additions were terminated 193 minutes after the initial exotherm was observed, when 130 g of each solution had been added.

The contents were then cooled to 35 °C then transferred to a 3 gallon autoclave where vacuum was used to remove any unreacted ethylene. At this point 1 g of RHODOLINE® 670 (a proprietary defoamer composition supplied by Rhodia) was added to reduce foaming, followed by 2 g of sodium erythorbate in 20 g of water, then 2 g of t-butyl hydroperoxide (70%) in 10 g of water. The contents was allowed to mix for 15 minutes and were then removed.

The physical properties of the resultant latex were:

| | |
|---|---|
| % non-volatile | 58.2 |
| Tg | 1.0 °C |
| Viscosity | 225 cps (Brookfield LVF viscometer 60 rpm) |
| pH | 4.58 |
| coagulum | <.01% (100 mesh screen) |

Estimated polymer composition: 78.5% vinyl acetate, 19.5% ethylene, 1% AMPS, 1% acrylic acid.

### Example 2

The autoclave was charged with 900 g of water, 10.5 g of AEROSOL@ MA-80-I (sodium dihexyl sulfosuccinate), 0.5 g of sodium acetate, 5.0 g of a 1% solution of ferrous ammonium sulfate. The pH of the charge was adjusted to 4.2 with 1.1 g of acetic acid. Agitation was begun and 354 g of vinyl acetate was charged.

After the initial charging, the reactor was purged with nitrogen followed by a purge with ethylene and heated under agitation to 55 °C, then 400 g of ethylene was charged. To initiate polymerization a solution of 3% sodium persulfate was feed at 0.5 g/min and a 1.8% solution of sodium erythorbate was also feed at 0.5 g/min. Upon evidence of an exotherm, two additional feeds were begun: 1061 g of vinyl acetate was added over 120 minutes and an aqueous feed consisting of 314.2 g water, 16.7 g RHODAFAC® RS-610 (phosphate ester of tridecyl alcohol ethoxylate supplied by Rhodia), 16.7 g of PLURONIC® L64 (ethylene oxide/propylene oxide block copolymer supplied by BASF), 16.7 g of AMPS® 2403 (50% solution of the sodium salt of acrylamido methyl propane sulfonic acid supplied by Lubrizol), 16.7 g acrylic acid, and 18.9 g of 7% ammonium hydroxide was feed uniformly over 120 minutes. When the monomer feeds were begun, the temperature as ramped from 55 °C to 90 ° C over 30 minutes and then held at 90°C for the remainder of the reaction.

As in Example 1, the addition rates of the sodium persulfate and sodium erythorbate were adjusted over time in an effort to obtain a uniform conversion profile. Both of these additions were terminated 165 minutes after the initial exotherm was observed, when 160 g of each solution had been added.

After termination of the feeds the remainder of the conditions were the same as that of Example 1.

The physical properties of the resultant latex were:

| | |
|---|---|
| % non-volatile | 52.0 |
| Tg | -1.3 °C |
| Viscosity | 208 cps (Brookfield LVF viscometer 60 rpm) |
| pH | 4.87 |
| coagulum | <.01% (100 mesh screen) |

Estimated polymer composition: 78.1% vinyl acetate, 20.5% ethylene, 0.46% AMPS, 0.92% acrylic acid.

### Example 3

The recipe and procedure of Example 2 was followed except the aqueous feed was adjusted to contain: 281.3 g water, 66.8 g RHODASURF® TLA 4050 (a 50% solution of tridecyl alcohol ethoxylate having 40 moles of ethylene oxide, supplied by Rhodia), 16.7 g of AMPS® 2403 (50% solution of the sodium salt of acrylamido methyl propane sulfonic acid supplied by Lubrizol), 16.7 g acrylic acid, and 15.5 g of 7% ammonium hydroxide.

In addition, the 3% sodium persulfate solution was adjusted to contain 2% sodium bicarbonate.

As in Example 1, the addition rates of the sodium persulfate and sodium erythorbate were adjusted over time in an effort to obtain a uniform conversion profile. Both of these additions were terminated 165 minutes after the initial exotherm was observed, when 150 g of each solution had been added.

After termination of the feeds the remainder of the conditions were the same as that of Example 1.

The physical properties of the resultant latex were:

| | |
|---|---|
| % non-volatile | 53.4 |
| Tg | -2.5 °C |
| Viscosity | 294 cps (Brookfield LVF viscometer 60 rpm) |
| pH | 5.18 |
| coagulum | <.015% (100 mesh screen) |

Estimated polymer composition: 78.1% vinyl acetate, 20.5% ethylene, 0.46% AMPS, 0.92% acrylic acid.

### Example 4

The recipe and procedure of Example 2 was followed except the aqueous feed was adjusted to contain: 265.4 g water, 83.8 g RHODASURF® TLA 3040 (a 40% solution of tridecyl alcohol ethoxylate having 30 moles of ethylene oxide, supplied by Rhodia), 16.7 g of AMPS® 2403 (50% solution of the sodium salt of acrylamido methyl propane sulfonic acid supplied by Lubrizol), 16.7 g acrylic acid, and 15.5 g of 7% ammonium hydroxide

As in Example 1, the addition rates of the sodium persulfate and sodium erythorbate were adjusted over time in an effort to obtain a uniform conversion profile. Both of these additions were terminated 165 minutes after the initial exotherm was observed, when 145 g of each solution had been added.

After termination of the feeds the remainder of the conditions were the same as that of Example 1.

The physical properties of the resultant latex were:

| | |
|---|---|
| % non-volatile | 52.9 |
| Tg | -2.4 °C |
| Viscosity | 255 cps (Brookfield LVF viscometer 60 rpm) |
| pH | 5.04 |
| coagulum | <.01% (100 mesh screen) |

Estimated polymer composition: 78.1% vinyl acetate, 20.5% ethylene, 0.46% AMPS, 0.92% acrylic acid.

### Example 5

The recipe and procedure of Example 1 was followed except the aqueous feed was adjusted to contain: 182.7 g water, 19.2 g RHODAFAC® RS-610 (phosphate ester of tridecyl alcohol ethoxylate supplied by Rhodia), 19.2 g of PLURONIC® L64 (ethylene oxide/propylene oxide block copolymer supplied by BASF), 38.3 g of AMPS@ 2403 (50% solution of the sodium salt of acrylamido methyl propane sulfonic acid supplied by Lubrizol), 19.2 g acrylic acid, and approximately 16.5g of 7% ammonium hydroxide.

As in Example 1, the addition rates of the sodium persulfate and sodium erythorbate were adjusted over time in an effort to obtain a uniform conversion profile. Both of these additions were terminated 165 minutes after the initial exotherm was observed, when 150 g of each solution had been added.

After termination of the feeds the remainder of the conditions were the same as that of Example 1.

The physical properties of the resultant latex were:

| | |
|---|---|
| % non-volatile | 57.3 |
| Tg | 0.4 °C |
| Viscosity | 2590 cps (Brookfield LVF viscometer 60 rpm) |
| pH | 4.5 |
| coagulum | <.01% (100 mesh screen) |

Estimated polymer composition: 78.5% vinyl acetate, 19.5% ethylene, 1% AMPS, 1% acrylic acid.

### Example 6

The recipe and procedure of Example 2 was followed except the aqueous feed was adjusted to contain: 346.2 g water, 16.7 g RHODAFAC® RS-610 (phosphate ester of tridecyl alcohol ethoxylate supplied by Rhodia), 16.7 g of PLURONIC® L64 (ethylene oxide/propylene oxide block copolymer supplied by BASF), 16.7 g of AMPS@ 2403 (50% solution of the sodium salt of acrylamido methyl propane sulfonic acid supplied by Lubrizol), and 6.0 g of 7% ammonium hydroxide. No acrylic acid was added. The vinyl acetate feed was modified to contain 1.82 g of triallyl cyanurate and 1059 g vinyl acetate.

In addition the sodium persulfate concentration was adjusted to 3% and 2% sodium bicarbonate and the sodium erythorbate was adjusted to 1.8%.

As in Example 1, the addition rates of the sodium persulfate and sodium erythorbate were adjusted over time in an effort to obtain a uniform conversion profile. Both of these additions were terminated 165 minutes after the initial exotherm was observed, when 160 g of each solution had been added.

After termination of the feeds the remainder of the conditions were the same as that of Example 1.

The physical properties of the resultant latex were:

| | |
|---|---|
| % non-volatile | 52.2 |
| Tg | -3.5 °C |
| Viscosity | 332 cps (Brookfield LVF viscometer 60 rpm) |
| pH | 4.90 |
| coagulum | <.01% (100 mesh screen) |

Estimated polymer composition: 78.4% vinyl acetate, 20.5% ethylene, 0.5% AMPS, 0.1% Triallyl cyanurate.

### Example 7

The autoclave was charged with 845 g of water, 8.4 g of AEROSOL@ MA-80-I (sodium dihexyl sulfosuccinate), 0.5 g of sodium acetate, 5.0 g of a 1% solution of ferrous ammonium sulfate. The pH of the charge was adjusted to 4.2 with 1.2 g of acetic acid. Agitation was begun and 215.0 g of vinyl acetate was charged.

After the initial charging, the reactor was purged with nitrogen followed by a purge with ethylene and heated under agitation to 55 °C, then 400 g of ethylene was charged. To initiate polymerization a solution of 4.5% sodium persulfate and 1.67% sodium bicarbonate was feed at 0.5 g/min and a 2.7% solution of sodium erythorbate was also feed at 0.5 g/min. Upon evidence of an exotherm, two additional feeds were begun: 1200 g of vinyl acetate was added over 120 minutes and an aqueous feed consisting of 230.7 g water, 25.1 g of PLURONIC® L64 (ethylene oxide/propylene oxide block copolymer supplied by BASF), 16.76 g RHODACAL® DS10 (sodium dodecyl benzenesulfonate supplied by Rhodia) 16.7 g of AMPS@ 2403 (50% solution of the sodium salt of acrylamido methyl propane sulfonic acid supplied by Lubrizol), 25.1 g acrylic acid, and 8.7 g of 7% ammonium hydroxide was feed uniformly over 120 minutes. When the monomer feeds were begun, the temperature as ramped from 55 °C to 90 °C over 60 minutes and then held at 90°C for the remainder of the reaction.

The addition rates of the sodium persulfate and sodium erythorbate solutions were adjusted over time in an effort to obtain a uniform conversion profile. Both of these additions were terminated 165 minutes after the initial exotherm was observed, when 140 g of each solution had been added.

After termination of the feeds the remainder of the conditions were the same as that of Example 1.

The physical properties of the resultant latex were:

| | |
|---|---|
| % non-volatile | 54.4 |
| Tg | -1.4 °C |
| Viscosity | 239 cps (Brookfield LVF viscometer 60 rpm) |
| pH | 4.8 |
| coagulum | <.01% (100 mesh screen) |

Estimated polymer composition: 77.4% vinyl acetate, 20.8% ethylene, 0.46% AMPS, 1.37% acrylic acid.

### Example 8

The procedure of Example 7 was used except the initial vinyl acetate charge was 354 g and the feed vinyl acetate was 1061 g. The aqueous feed was changed to contain: 238.4 g water, 16.7 g of PLURONIC® L64 (ethylene oxide/propylene oxide block copolymer supplied by BASF), 16.7 g RHODAFAC® RS-610, 16.7 g of AMPS® 2403 (50% solution of the sodium salt of acrylamido methyl propane sulfonic acid supplied by Lubrizol), 16.7 g acrylic acid, and 20.6 g of 7% ammonium hydroxide

The addition rates of the sodium persulfate and sodium erythorbate solutions were adjusted over time in an effort to obtain a uniform conversion profile. Both of these additions were terminated 165 minutes after the initial exotherm was observed, when 187 g of each solution had been added.

After termination of the feeds the remainder of the conditions were the same as that of Example 1.

The physical properties of the resultant latex were:

| | |
|---|---|
| % non-volatile | 51.5 |
| Tg | -0.8 °C |
| Viscosity | 110 cps (Brookfield LVF viscometer 60 rpm) |
| pH | 4.99 |
| coagulum | <.01% (100 mesh screen) |

Estimated polymer composition: 77.75% vinyl acetate, 20.9% ethylene, 0.46% AMPS, 0.92% acrylic acid.

### Rotogravure Printing

The polymers described in Examples 1-6 above were formulated into paper coating compositions containing 100 parts clay pigment, 5 parts dispersion binder, 1.2 parts calcium stearate (lubricant) and 0.6 parts carboxymethyl cellulose (thickener), all on a dry basis. The solids level was set to about 56% for each composition prior to coating onto an uncoated paper substrate via a blade coating applicator at a targeted dry coating weight of 4.0 lbs/330oft², followed by supercalendering of the substrate to a specified gloss level. Actual coating weights were all in a range from 3.97 to 4.09 lbs/3300ft². The coated papers were then dried under infrared heat lamps.

The coated / calendered papers were evaluated for gravure printability according to the Helio print test method. The Helio print test method can be found in IGT Information leaflet W41 Heliotest from IGT Testing Systems of Amsterdam, the Netherlands. The test measures the number of missing dots on a coated paper substrate after being printed with a special gravure cylinder on an IGT Test printer. The greater the distance to the 20^{th} missing dot, the better the printability.

Table 1 below illustrates the results, where the Coating numbers correspond to the Examples described above. The results for a styrene butadiene dispersion commonly used as a coating binder for rotogravure printing, shown below as Control, is also shown for purposes of comparison.

**Table 1**

| Coating | Dispersion Polymer Type | Surfactants Anionic / Nonionic | Helio Result Distance (mm) to 20^{th} Missing Dot |
|---|---|---|---|
| 1 | VAE | MA80I/L64 | 64.8 |
| 2 | VAE | MA80I+RS610/L64 | 64.0 |
| 3 | VAE | MA80I/TLA4050 | 43.5 |
| 4 | VAE | MA80I/TLA3040 | 33.7 |
| 5 | VAE | MA80I+RS610/L64 | 51.5 |
| 6 | VAE | MA80I+RS610/L64 | 52.5 |
| Control | SBR | N/A¹ | 52.0 |

| | | | |
|---|---|---|---|
| ¹Information not provided | | | |

As seen in Table 1, the coatings (1, 2, 5 and 6) in which a polyethylene oxide/polypropylene oxide block copolymer (PLURONIC® L64) was used as the nonionic surfactant, in combination with another anionic or nonionic surfactant, provided distinctly better Helio results than the coatings (3 and 4) that did not (using a tridecylethoxylate instead of an EO-PO block copolymer in combination with an anionic emulsifier). Helio results for coatings containing a polyethylene oxide/polypropylene oxide block copolymer surfactant gave gravure printability at least equal to that of a typical commercial (SBR) binder, and in some cases (coatings 1 and 2) printability was significantly better than that provided by the SBR.

### Paper Blinding Strength

The binding strength of two dispersion polymers according to the invention was measured with an IGT Test Instrument, which measures the pick strength of a coated paper surface. The method is described in IGT Information Leaflet W70. Better results are indicated by higher pick strength numbers. Table 2 illustrates the IGT pick strength of paper coatings utilizing the APE surfactant-free dispersions described above in Examples 7 and 8, correspondingly numbered as coatings. As a control, a commercial vinyl acetate ethylene copolymer paper coating binder containing a nonylphenol ethoxylate APE surfactant (VINNAPAS® 100HS, available from Wacker Chemical Corp, Adrian, MI) was also evaluated. The VINNAPAS® 100HS, which is known to provide high IGT pick strength, also contains some amount of triallyl cyanurate. The coating formulations contained 18 parts of dispersion binder and 0.15 parts of an alkali swellable thickener (STEREOCOLL® FS from BASF) per 100 parts of a No.1 coating clay, on a dry solids basis. The formulations were coated to an unbleached kraft paper surface using a No. 3 Meyer Rod at a target coat weight of 3.0 lbs/1000ft² and dried in an oven for 90 seconds at 250°F (121°C).

**Table 2**

| Coating | Surfactants Anionic / Nonionic | IGT Pick strength (vvp units) |
|---|---|---|
| 7 | MA80I+DS10/L64 | 29 |
| 8 | MA80I+RS610/L64 | 31 |
| Control | APE | 28 |

As seen in Table 2, inventive coating compositions 7 and 8, which each employed a polyethylene oxide/polypropylene oxide block copolymer surfactant in combination with an anionic emulsifier, provided IGT pick strength equivalent to or better than was provided by the standard commercial product while avoiding the use of APE surfactants. Thus, as seen in Tables 1 and 2, the inventors have produced coating compositions using binder emulsions that avoid entirely the use of APE surfactants while maintaining, and in some cases bettering, the performance of coatings using traditional binder emulsions.

Although the invention is illustrated and described herein with reference to specific embodiments, the invention is not intended to be limited to the details shown. Rather, various modifications may be made in the details within the scope and range of equivalents of the claims without departing from the invention.

## Claims

1. A composition for coating paper, comprising at least one pigment selected from the group consisting of polymeric pigments, aluminosilicates, calcium carbonate, titanium dioxide, talc, barium sulfate, zinc oxide, aluminum trihydrate, amorphous silica and silicates;
wherein the pigment is dispersed in an aqueous dispersion of a polymeric binder that is a copolymer of vinyl acetate, ethylene, at least one ethylenically unsaturated sulfonic acid or salt thereof and optionally one or more other monomers, wherein vinyl acetate units constitute in a range of 70-95 wt% of the polymeric binder and ethylene units constitute in a range of 5-30 wt% of the polymeric binder;
**characterized in that** the polymeric binder has a mean particle size in a range from 0.1 µm to 0.3 µm and the optional one or more other monomers do not include any *N*-(C₁₋₄) alkylol (meth)acrylamide; and
wherein the aqueous dispersion of the polymeric binder is free of alkylphenol ethoxylate surfactants and comprises a nonionic surfactant component consisting of a polyethylene oxide/polypropylene oxide block copolymer and optionally one or more other nonionic surfactants, and optionally comprises an anionic surfactant component consisting of one or more anionic surfactants.

2. The composition of claim 1, wherein the polyethylene oxide/polypropylene oxide block copolymer is a polyethylene oxide/polypropylene oxide block/polyethylene oxide triblock copolymer.

3. The composition of claim 1 or 2, wherein the at least one ethylenically unsaturated sulfonic acid or salt thereof comprises 2-acrylamido-2-methylpropane sulfonic acid and/or a salt thereof.

4. The composition of claim 1 or 2, wherein the at least one ethylenically unsaturated sulfonic acid or salt thereof comprises a vinylsulfonic acid and/or a salt thereof.

5. The composition of any preceding claim, wherein the copolymer further comprises said one or more other monomers and said other monomers comprise an ethylenically unsaturated carboxylic acid in an amount that constitutes 0.5 to 4.0 wt% of the polymeric binder.

6. The composition of claim 5, wherein the ethylenically unsaturated carboxylic acid comprises acrylic acid.

7. The composition of any preceding claim, wherein the copolymer further comprises a polyunsaturated comonomer.

8. The composition of any preceding claim, wherein the aqueous dispersion of the polymeric binder comprises said anionic surfactant component.

9. The composition of claim 8, wherein the anionic surfactant component comprises a sodium sulfosuccinic diester of a C6-C22 alkanol.

10. The composition of claim 8, wherein the anionic surfactant component comprises sodium dihexyl sulfosuccinate.

11. The composition of claim 8, wherein the anionic surfactant component comprises sodium dodecyl benzenesulfonate.

12. A method of coating paper or cardboard, comprising applying to a surface of the paper the composition of any preceding claim and subsequently drying the composition to form a solid coating on the surface.

13. Paper or cardboard having on a surface thereof a solid coating formed by drying the composition of any preceding claim.

## Patentansprüche

1. Zusammensetzung zum Beschichten von Papier, umfassend mindestens ein Pigment aus der Gruppe bestehend aus polymeren Pigmenten, Aluminosilikaten, Calciumcarbonat, Titandioxid, Talk, Bariumsulfat, Zinkoxid, Aluminiumtrihydrat, amorphem Siliciumdioxid und Silikaten;
wobei das Pigment in einer wässrigen Dispersion eines polymeren Bindemittels dispergiert ist, bei welchem es sich um ein Copolymer von Vinylacetat, Ethylen, mindestens einer ethylenisch ungesättigten Sulfonsäure oder einem Salz davon und gegebenenfalls einem oder mehreren anderen Monomeren handelt, wobei Vinylacetat-Einheiten 70-95 Gew.-% des polymeren Bindemittels ausmachen und Ethylen-Einheiten 5-30 Gew.-% des polymeren Bindemittels ausmachen;
**dadurch gekennzeichnet, dass** das polymere Bindemittel eine mittlere Teilchengröße in einem Bereich von 0,1 µm bis 0,3 µm aufweist und das oder die fakultativen anderen Monomere kein *N*-(C₁-C₄)-Alkylol(meth)acrylamid einschließen; und
wobei die wässrige Dispersion des polymeren Bindemittels frei von Alkylphenolethoxylat-Tensiden ist und eine nichtionische Tensidkomponente, die aus einem Polyethylenoxid/Polypropylenoxid-Blockcopolymer und gegebenenfalls einem oder mehreren anderen nichtionischen Tensiden besteht, umfasst und gegebenenfalls eine anionische Tensidkomponente, die aus einem oder mehreren anionischen Tensiden besteht, umfasst.

2. Zusammensetzung nach Anspruch 1, wobei es sich bei dem Polyethylenoxid/Polypropylenoxid-Blockcopolymer um ein Polyethylenoxid/Polypropylenoxidblock/Polyethylenoxid-Triblockcopolymer handelt.

3. Zusammensetzung nach Anspruch 1 oder 2, wobei die mindestens eine ethylenisch ungesättigte Sulfonsäure oder das mindestens eine Salz davon 2-Acrylamido-2-methylpropansulfonsäure und/oder ein Salz davon umfasst.

4. Zusammensetzung nach Anspruch 1 oder 2, wobei die mindestens eine ethylenisch ungesättigte Sulfonsäure oder das mindestens eine Salz davon eine Vinylsulfonsäure/oder ein Salz davon umfasst.

5. Zusammensetzung nach einem der vorhergehenden Ansprüche, wobei das Copolymer ferner das oder die anderen Monomere umfasst und die anderen Monomere eine ethylenisch ungesättigte Carbonsäure in einer Menge, die 0,5 bis 4,0 Gew.-% des polymeren Bindemittels ausmacht, umfassen.

6. Zusammensetzung nach Anspruch 5, wobei die ethylenisch ungesättigte Carbonsäure Acrylsäure umfasst.

7. Zusammensetzung nach einem der vorhergehenden Ansprüche, wobei das Copolymer ferner ein mehrfach ungesättigtes Comonomer umfasst.

8. Zusammensetzung nach einem der vorhergehenden Ansprüche, wobei die wässrige Dispersion des polymeren Bindemittels die anionische Tensidkomponente umfasst.

9. Zusammensetzung nach Anspruch 8, wobei die anionische Tensidkomponente einen Natriumsulfobernsteinsäurediester eines C6-C22-Alkanols umfasst.

10. Zusammensetzung nach Anspruch 8, wobei die anionische Tensidkomponente Natriumdihexylsulfosuccinat umfasst.

11. Zusammensetzung nach Anspruch 8, wobei die anionische Tensidkomponente Natriumdodecylbenzolsulfonat umfasst.

12. Verfahren zum Beschichten von Papier oder Pappe, bei dem man auf eine Oberfläche des Papiers die Zusammensetzung nach einem der vorhergehenden Ansprüche aufbringt und die Zusammensetzung anschließend trocknet, wobei man eine feste Beschichtung auf der Oberfläche erhält.

13. Papier oder Pappe, das bzw. die auf einer Oberfläche davon eine durch Trocknen der Zusammensetzung nach einem der vorhergehenden Ansprüche gebildete Beschichtung aufweist.

## Revendications

1. Composition pour revêtement du papier, comprenant au moins un pigment choisi dans le groupe constitué par les pigments polymères, les aluminosilicates, le carbonate de calcium, le dioxyde de titane, le talc, le sulfate de baryum, l'oxyde de zinc, le trihydrate d'aluminium, la silice amorphe et les silicates ;
où le pigment est dispersé dans une dispersion aqueuse d'un agent liant polymère qui est un copolymère d'acétate de vinyle, d'éthylène, d'au moins un acide sulfonique portant des insaturations éthyléniques ou de l'un de ses sels et éventuellement d'un ou de plusieurs autres monomères, les motifs acétate de vinyle constituant entre 70 et 95 % en masse de l'agent liant polymère et les motifs éthylène constituant entre 5 et 30 % en masse de l'agent liant polymère ;
**caractérisée en ce que** l'agent liant polymère présente une granulométrie moyenne comprise entre 0,1 µm et 0,3 µm et **en ce que** le ou les autres monomères éventuels n'incluent aucun (méth)acrylamide de N-alkylol en C₁₋₄ ; et
où la dispersion aqueuse de l'agent liant polymère ne contient aucun tensioactif de type éthoxylate d'alkylphénol et comprend un composant tensioactif non ionique constitué d'un copolymère bloc oxyde de polyéthylène/oxyde de polypropylène et éventuellement d'un ou de plusieurs autres tensioactifs non ioniques, et comprend éventuellement un composant tensioactif anionique constitué d'un ou de plusieurs tensioactifs anioniques.

2. Composition conforme à la revendication 1, où le copolymère bloc oxyde de polyéthylène/oxyde de polypropylène est un copolymère tribloc oxyde de polyéthylène/bloc oxyde de polypropylène/oxyde de polyéthylène.

3. Composition conforme à la revendication 1 ou 2, où le ou les acides sulfoniques portant des insaturations éthyléniques ou leurs sels comprennent l'acide 2-acrylamido-2-méthylpropanesulfonique et/ou l'un de ses sels.

4. Composition conforme à la revendication 1 ou 2, où le ou les acides sulfoniques portant des insaturations éthyléniques ou leurs sels comprennent un acide vinylsulfonique et/ou l'un de ses sels.

5. Composition conforme à l'une quelconque des revendications précédentes, où le copolymère comprend en outre lesdits un ou plusieurs autres monomères et lesdits autres monomères comprennent un acide carboxylique portant des insaturations éthyléniques à une teneur constituant entre 0,5 et 4,0 % de l'agent liant polymère.

6. Composition conforme à la revendication 5, où l'acide carboxylique portant des insaturations éthyléniques comprend de l'acide acrylique.

7. Composition conforme à l'une quelconque des revendications précédentes, où le copolymère comprend en outre un comonomère polyinsaturé.

8. Composition conforme à l'une quelconque des revendications précédentes, où la dispersion aqueuse de l'agent liant polymère comprend ledit composant tensioactif anionique.

9. Composition conforme à la revendication 8, où le composant tensioactif anionique comprend un diester sulfosuccinique sodium d'un alcanol en C6-C22.

10. Composition conforme à la revendication 8, où le composant tensioactif anionique comprend du sulfosuccinate de dihexyle sodium.

11. Composition conforme à la revendication 8, où le composant tensioactif anionique comprend du benzènesulfonate de dodécyle sodium.

12. Procédé de revêtement de papier ou de carton, comprenant l'application à une surface du papier de la composition conforme à l'une quelconque des revendications précédentes suivie du séchage de la composition pour former un revêtement solide sur la surface.

13. Papier ou carton comportant sur l'une de ses surfaces un revêtement solide formé par le séchage de la composition conforme à l'une quelconque des revendications précédentes.
